# EUROPEAN PATENT SPECIFICATION

(11) **EP 3 157 231 B1**
(45) Date of publication and mention of the grant of the patent: **26.06.2019**
(21) Application number: 15809866.5
(22) Date of filing: 06.05.2015
(51) Int. Cl.: H04M 1/02, H04B 1/3816

(54) **MOBILE TERMINAL AND SIM CARD TRAY THEREOF HAVING A BUTTON STRUCTURE**
MOBILES ENDGERÄT UND SIM-KARTEN-FACH DAVON MIT EINER TASTENSTRUKTUR
TERMINAL MOBILE, ET PLATEAU DE CARTE SIM CORRESPONDANT AYANT UNE STRUCTURE DE BOUTON

(30) Priority: 16.06.2014 CN 201410266594
(43) Date of publication of application: 19.04.2017
(73) Proprietor: JRD Communication Inc., Shenzhen, Guangdong 518057 (CN)
(72) Inventor: JIANG, Tao, Shenzhen Guangdong 518057 (CN)
(74) Representative: Brachmann, Roland W.
(86) International application number: PCT/CN2015/078403
(87) International publication number: WO 2015/192698

(56) References cited:
- WO-A1-2013/144291
- CN-A- 103 248 732
- CN-A- 103 248 732
- CN-A- 103 401 091
- CN-A- 103 401 091
- CN-A- 103 929 516
- CN-A- 104 065 771
- CN-A- 104 158 927
- CN-U- 203 027 326
- US-A1- 2014 078 660
- US-B1- 6 222 144

## Description

The present invention relates to the field of mobile terminal technologies, and in particular relates to a mobile terminal and a SIM card holder having a button structure thereof.

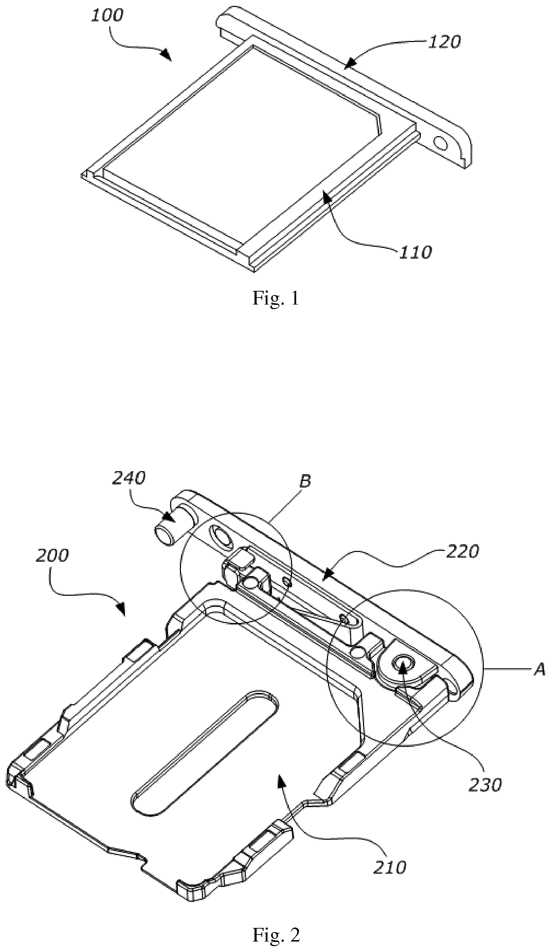

Currently, existing mobile terminal devices, such as smart phones, tablets, etc., often use a SIM card holder to install a SIM card in the mobile terminal, as shown in Fig.1. Fig.1 illustrates the structure of the SIM card holder according to the prior art. The SIM card holder 100 is composed of one part, i.e. the tray 110 and the SIM cover 120 are formed integrally.

The SIM card holder 100 is typically disposed at a side of a mobile terminal, while one or more side buttons, e.g. the power button, are provided on the side of the mobile terminal that is close to the SIM card holder 100; according to the prior art, the SIM card holder and the side buttons are disposed in a mutually independent and separate manner. However, the existing SIM card holder 100 can only achieve the function of inserting and pulling the SIM card, and when the tray 110 is inserted into a mobile terminal, the SIM cover 120 exposed outside of the mobile terminal is unable to move relative to the tray 110, while the side buttons can simply achieve functions of the buttons. It will not be hard to understand that, in such a way of providing the SIM card holder 100 and the side buttons side by side according to the prior art, there are too many parts that not only affects the external beauty of a mobile terminal, but also is not favorable for the development trend of mobile terminals becoming lighter, thinner and simpler.

WO 2013/144291 A1 discloses a display device, e.g. a mobile communication device, including a display and a hardware power button assembly, wherein the power button assembly, located on one side of the housing of the device, is operable to open from the device and to receive or eject a subscriber identity module (SIM) card, i.e. the power button assembly has a SIM card holder or tray or drawer functionality. Further the power button assembly is operable to close so as to store the SIM card in the device, wherein the device is operable to use the SIM card to define a SIM identity for the device. The power button assembly further comprises a hinge door mechanism that prevents release of the SIM card in response to pressing the door against the power button, which is a standard power tact switch.

US 2014/0078660 A1 discloses an apparatus for securing a memory module or SIM within an electronic device which includes an external control (such as a volume control, camera button, or power button) that hides the memory module and/or SIM. When attached to the electronic device, the external control is disposed at the entrance of a cavity in which the memory module and/or SIM is located. The external control may be attached to a tray that holds one or more SIM cards and/or SD cards.

The prior art is still in need of improvement and development.

In light of the above drawbacks of the prior art, the present invention provides a mobile terminal and a SIM card holder having a button structure thereof, which improves the existing SIM card holders and is favorable for the mobile terminals to become lighter, thinner and simpler.

This problem is solved according to the features of the independent claims. Further embodiments result from the depending claims.

The technical solution according to the present invention is as follows:
A SIM card holder is provided, the SIM card holder having a button structure, comprising: a tray and a cover, wherein one end of the cover is rotatably connected to the tray by disposing a rotation shaft structure, and the other end of the cover is provided with a button contact. Furthermore, a V-shaped spring sheet is provided between the cover and the tray, the V-shaped spring sheet comprising an installation portion fixedly installed on the internal side of the cover and a spring portion abutting against the external side of the tray.

According to an embodiment, the rotation shaft structure comprises: a rotation shaft fixedly mounted on the tray, and a rotation shaft seat fixedly mounted on the cover, the rotation shaft being assembled onto the rotation shaft seat.

According to an embodiment, the external side of the tray is formed with a first opening groove, the spring portion is disposed inside the first opening groove, and the end of the spring portion abuts against the bottom of the first opening groove.

According to an embodiment, the end of the installation portion bends inward to form a limiting hook, a protrusion is formed on the tray, and the protrusion and the limiting hook are locked with each other.

According to an embodiment, the internal side of the protrusion is formed with a second opening groove, and the limiting hook is disposed within the second opening groove.

According to an embodiment, the end of the installation portion forms a guide groove through the symmetric guide edges, and the protrusion is disposed within the guide groove.

A mobile terminal is provided, comprising a mobile terminal body, a button switch being provided inside the mobile terminal body, the SIM card holder having a button structure according to any one of the above being provided on the mobile terminal body, and the button switch being in contact connection with the button contact. Furthermore, a V-shaped spring sheet is provided between the cover and the tray, the V-shaped spring sheet comprising an installation portion fixedly installed on the internal side of the cover and a spring portion abutting against the external side of the tray.

According to an embodiment, the shell of the mobile terminal body is provided with a through hole for the button contact to run through.

Also, a mobile terminal is suggested, comprising a mobile terminal body, a button switch being provided inside the mobile terminal body, wherein the SIM card holder comprises a tray and a cover, one end of the cover being rotatably connected to the tray by disposing a rotation shaft structure, the other end of the cover being provided with a button contact, and the button switch being in contact connection with the button contact.

According to an embodiment, the rotation shaft structure comprises: a rotation shaft fixedly mounted on the tray, and a rotation shaft seat fixedly mounted on the cover, the rotation shaft being assembled onto the rotation shaft seat.

According to an embodiment, the external side of the tray is formed with a first opening groove, the spring portion is disposed inside the first opening groove, and the end of the spring portion abuts against the bottom of the first opening groove.

According to an embodiment, the end of the installation portion bends inward to form a limiting hook, a protrusion is formed on the tray, and the protrusion and the limiting hook are locked with each other.

According to an embodiment, the internal side of the protrusion is formed with a second opening groove, and the limiting hook is disposed within the second opening groove.

According to an embodiment, the end of the installation portion forms a guide groove through the symmetric guide edges, and the protrusion is disposed within the guide groove.

Advantageous effects of the present invention are as follows:
Compared with the prior art, the present invention provides a mobile terminal and a SIM card holder having a button structure thereof. As its design combines the SIM card holder and the button, it reduces one side button part for the mobile terminal, which is favorable for the mobile terminal to become light and thin and saves the cost. Since one button is removed, moreover, the external design of the product may be simplified such that the appearance of the product is simpler and more beautiful.

The aforementioned characteristics, features and advantages of the invention as well as the way they are achieved will be further illustrated in connection with the following examples and considerations as discussed in view of the figures.
- Fig.1: illustrates the structure of a SIM card holder according to the prior art;
- Fig.2: is a 3D view of a SIM card holder having a button structure according to the present invention;
- Fig.3: is a partially enlarged view of A in Fig.2;
- Fig.4: is a partially enlarged view of B in Fig.2;
- Fig.5: is a cross-sectional view of a SIM card holder having a button structure according to the present invention;
- Fig.6: is a partially enlarged view of C in Fig.5;
- Fig.7: is a partial view of a mobile terminal according to the present invention.

The present invention provides a mobile terminal and a SIM card holder having a button structure thereof. To make the object, technical solution and effect of the present invention clearer and more specific, the present invention will be further described in detail below with reference to the accompanying drawings and examples. It should be understood that the specific embodiments herein are only used to describe the present invention, rather than to limit the present invention.

Please refer to Fig.2, and Fig.2 is a 3D view of a SIM card holder having a button structure according to the present invention.

As shown in Fig.2, the SIM card holder having a button structure 200 comprises:
A tray 210 and a cover 220, one end of the cover 220 being rotatably connected to the tray 210 by disposing a rotation shaft structure 230, and the other end thereof being provided with a button contact 240. Unlike the existing integrally formed SIM card holder, the tray 210 and the cover 220 in the SIM card holder according to the present invention may make relatively movements, such that the SIM card holder according to the present invention not only can be used to install a SIM card, but also can be used as a side button of a mobile terminal.

It should be noted that the SIM card holder 200 may be disposed inside the back cover of a mobile terminal and immediately next to the battery, or may be disposed on a side of the shell of a mobile terminal (specifically, a total of four sides, i.e. the top, bottom, left and right sides relative to the display, and preferably the right side); correspondingly, the side button implemented by the SIM card holder according to the present invention may be a power button, a screen switch button, a volume button, etc., which will not be described herein.

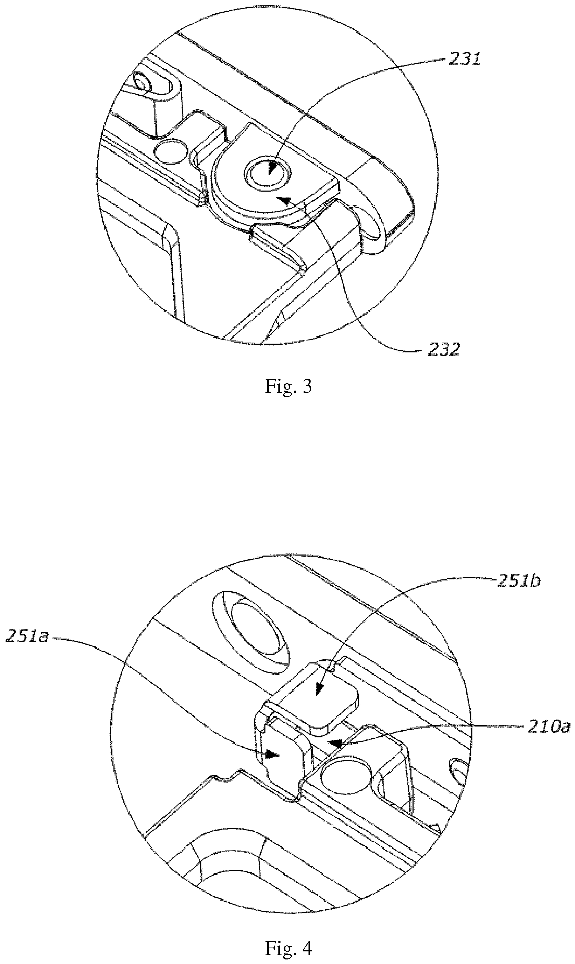

Also referring to Fig.3, Fig.3 is a partially enlarged view of A in Fig.2. The rotation shaft structure 230 specifically comprises: a rotation shaft 231 and a rotation shaft seat 232, preferably the rotation shaft 231 being fixedly mounted on the tray 210, and the rotation shaft seat 232 being fixedly mounted on the cover 220, and then the rotation shaft 231 being assembled and connected with the rotation shaft seat such that the cover 220 rotates relative to the tray 210. Of course, the present example may also dispose the rotation shaft 231 on the cover 220 and dispose the rotation shaft seat 232 on the tray 210, i.e., the installation positions of the rotation shaft 231 and the rotation shaft seat 232 are switched to achieve the same rotation effect.

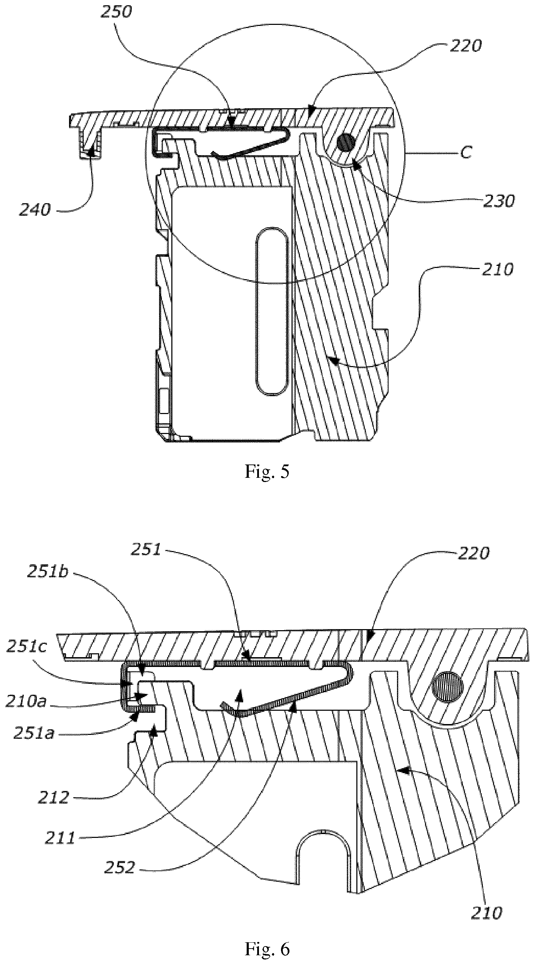

As shown in Fig.5, Fig.5 is a cross-sectional view of a SIM card holder having a button structure according to the present invention. A V-shaped spring sheet 250 is provided between the cover 220 and the tray 210 so as to reset the cover 220. Currently, all commonly used side buttons for mobile terminals use press-type buttons. By rotating the cover 220, the present invention makes the button contact 240 on the end of the cover to press the button switch on the mainboard of the mobile terminal, thereby realizing the cover 220 as a button. After pressing the button switch once, consequently, then it is necessary to promptly reset the cover 220 through the above V-shaped spring sheet 250.

Specifically, also referring to Fig.6, Fig.6 is a partially enlarged view of C in Fig.5. The V-shaped spring sheet 250 comprises an installation portion 251 and a spring portion 252, the installation portion 251 being fixedly installed on the internal side of the cover 220 and the spring portion 252 abutting against the external side of the tray 210. After completing a button triggering action, the button contact 240 promptly resets the cover 220 to the original state through the spring portion 252.

Furthermore, the external side of the tray 210 is formed with a first opening groove 211, the spring portion 252 is disposed inside the first opening groove 211, and the end of the spring portion 252 abuts against the bottom of the first opening groove 211.

Referring to both Fig.4 and Fig.6, Fig.4 is a partially-enlarged view of B in Fig.2. The end of the installation portion 251 bends inward to form a limiting hook 251a, a protrusion 210a is formed on the tray 210, and the protrusion 210a and the limiting hook 251a are locked with each other. The rotation range of the cover 220 is limited through the lock engagement between the limiting hook 251a and the protrusion 210a, so as to prevent it from excessive outward extension under an opposite acting force by the V-shaped spring sheet 250, avoid the outward extension of the cover 220 beyond the side of the mobile terminal, ensure the levelness of the side, prevent it from hanging to or scratching other articles, and prevent the damage to the cover 220 as a result of collision.

Furthermore, the internal side of the protrusion 210a is formed with a second opening groove 212, the limiting hook 251a is disposed within the second opening groove 212, and the limiting hook 251a can move vertically within the second opening groove 212.

Specifically, when the cover 220 rotates inward to trigger the button, the limiting hook 251a correspondingly moves downward within the second opening groove 212, and when the limiting hook 251a reaches the bottom side of the second opening groove 212, the cover 220 is stopped form rotating inward; when the cover 220 rotates outward to be reset under an opposite acting force by the V-shaped spring sheet 250, the limiting hook 251a moves upward within the second opening groove 212, and when the limiting hook 251a reaches the top side of the second opening groove 212, the cover 220 is stopped form rotating outward. In other words, the above engagement between the limiting hook 251a, the protrusion 210a and the second opening groove 212 can realize the two-way limitation on the cover 220.

In the present example, the end of the installation portion 251 forms a guide groove 251c through the symmetric guide edges 251b, and the protrusion 210a is disposed within the guide groove 251c, wherein the width of the guide groove 251c is equal to the width of the protrusion 210a, the purpose of which is that the guide groove 251c can make the cover 220 to rotate only in one direction, ensuring its rotational stability and preventing it from swinging from one side to another during rotation.

Of course, the limiting hook 251a and the symmetric guide edges 251b in the present example may also have a design of independent structure, rather than the structure design in the present example that integrally forms the V-shaped spring sheet 250 with the limiting hook 251a and the symmetric guide edges 251b. Nevertheless, the technical advantage of the structure design of integral formation is that some parts can be saved, which reduces the production cost of products to certain extent.

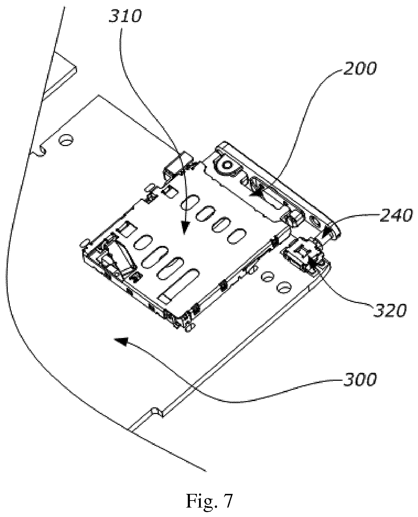

Based on the above example of the SIM card holder having a button structure, the present invention further provides a mobile terminal, as shown in Fig.7. Fig.7 is a partial view of a mobile terminal according to the present invention, the mobile terminal comprising:
A mobile terminal body 300 (only the mainboard of the mobile terminal is shown), a SIM connector 310 and a button switch 320 being provided inside the mobile terminal body 300, the SIM card holder having a button structure 200 according to any one of the above being provided on the mobile terminal body 300, the SIM card holder having a button structure 200 assembled inside the SIM connector and the button switch 240 just being in contact connection with the button contact 320.

Furthermore, the shell of the mobile terminal body 300 is provided with a through hole (not shown in Fig.7) for the button contact 240 to run through. Specifically, one end of the through hole corresponds to the position of the button contact 240, and the other end of the through hole corresponds to the position of the button switch 320, the button contact 240 runs through the through hole to directly reach the position of the button switch 320, and an external force is applied to press the button contact 240, thereby achieving the switch control on the button switch 320.

The principle and operating steps of the mobile terminal and the SIM card holder having a button structure according to the present invention will be further described below, specifically:
First, insert the tray 210 into the SIM connector 310, and fix the tray 210 with the SIM connector 310;
Subsequently, press the end of the cover 210 that is provided with the button contact 240, the cover 210 rotates inward around the rotation shaft 231 and triggers the button switch 320 through the button contact 240;
Lastly, when the button contact 240 triggers the button switch 320, make the cover 210 to rotate outward around the rotation shaft 231 to reset through the V-shaped spring sheet 250.

Wherein, when the tray 210 and the SIM connector 310 are fixed, the cover 210 can rotate around the rotation shaft 231, thereby achieving the functions of the buttons, while during the triggering process of the button contact 240 and the resetting process of the cover 210, the limiting hook 251a, the protrusion 210a and the second opening groove 212 can limit the rotation range of the cover 210, as described above.

In summary, the present invention provides a mobile terminal and a SIM card holder having a button structure thereof. As its design combines the SIM card holder and the button, it reduces one side button part for the mobile terminal, which allows the mobile terminal to become light and thin and saves cost. Since one button is removed, moreover, the external design of the product may be simplified such that the appearance of the product is simpler and more beautiful.

It should be understood that applications of the present invention are not limited to the above examples. To those skilled in the art, improvements or modifications may be made according to the above description, and all of these improvements or modifications shall be encompassed by the appended claims of the present invention.

## Claims

1. A SIM card holder having a button structure (200), comprising: a tray (210) and a cover (220), wherein one end of the cover (220) is rotatably connected to the tray (210) by disposing a rotation shaft structure (230), and the other end of the cover (220) is provided with a button contact (240) and wherein a V-shaped spring sheet (250) is provided between the cover (220) and the tray (210), the V-shaped spring sheet (250) comprising an installation portion (251) fixedly installed on the internal side of the cover (220) and a spring portion (252) abutting against the external side of the tray (210).

2. The SIM card holder having a button structure (200) according to claim 1, wherein the rotation shaft structure (230) comprises: a rotation shaft (231) fixedly mounted on the tray (210), and a rotation shaft seat (232) fixedly mounted on the cover (220), the rotation shaft (231) being assembled onto the rotation shaft seat (232).

3. The SIM card holder having a button structure (200) according to any of the preceding claims, wherein the external side of the tray (210) is formed with a first opening groove (211), the spring portion (252) is disposed inside the first opening groove (211), and the end of the spring portion (252) abuts against the bottom of the first opening groove (211).

4. The SIM card holder having a button structure (200) according to any of the preceding claims, wherein the end of the installation portion (251) bends inward to form a limiting hook (251a), a protrusion (210a) is formed on the tray (210), and the protrusion (210a) and the limiting hook (251a) are locked with each other.

5. The SIM card holder having a button structure (200) according to claim 4, wherein the internal side of the protrusion (210a) is formed with a second opening groove (212), and the limiting hook (251a) is disposed within the second opening groove (212).

6. The SIM card holder having a button structure (200) according to any of claims 4 or 5, wherein the end of the installation portion (251) forms a guide groove (251c) through symmetric guide edges (251b), and the protrusion (210a) is disposed within the guide groove (251c).

7. A mobile terminal, comprising a mobile terminal body, a button switch being provided inside the mobile terminal body, wherein the SIM card holder comprises a tray (210) and a cover (220), one end of the cover (220) being rotatably connected to the tray (210) by disposing a rotation shaft structure (230), the other end of the cover (220) being provided with a button contact (240), and the button switch being in contact connection with the button contact (240), and wherein a V-shaped spring sheet (250) is provided between the cover (220) and the tray (210), the V-shaped spring sheet (250) comprising an installation portion (251) fixedly installed on the internal side of the cover (220) and a spring portion (252) abutting against the external side of the tray (210).

8. The mobile terminal according to claim 7, wherein the rotation shaft structure (230) comprises: a rotation shaft (231) fixedly mounted on the tray (210), and a rotation shaft seat (232) fixedly mounted on the cover (220), the rotation shaft (231) being assembled onto the rotation shaft seat (232).

9. The mobile terminal according to any of claims 7 to 8, wherein the external side of the tray (210) is formed with a first opening groove (211), the spring portion (252) is disposed inside the first opening groove (211), and the end of the spring portion (252) abuts against the bottom of the first opening groove (211).

10. The mobile terminal according to any of claims 7 to 9, wherein the end of the installation portion (251) bends inward to form a limiting hook (251a), a protrusion (210a) is formed on the tray (210), and the protrusion (210a) and the limiting hook (251a) are locked with each other.

11. The mobile terminal according to claim 10, wherein the internal side of the protrusion (210a) is formed with a second opening groove (212), and the limiting hook (251a) is disposed within the second opening groove (212).

12. The mobile terminal according to any of claims 10 or 11, wherein the end of the installation portion (251) forms a guide groove (251c) through symmetric guide edges (251b), and the protrusion (210a) is disposed within the guide groove (251c).

## Patentansprüche

1. SIM-Karten-Halter mit einer Druckknopfstruktur (200), aufweisend: eine Schublade (210) und eine Abdeckung (220), wobei ein Ende der Abdeckung (220) durch Anordnen einer Drehwellenstruktur (230) mit der Schublade (210) drehbar verbunden ist, und wobei das andere Ende der Abdeckung (220) mit einem Druckknopfkontakt (240) versehen ist und wobei zwischen der Abdeckung (220) und der Schublade (210) ein V-förmiges Federblatt (250) vorgesehen ist, wobei das V-förmige Federblatt (250) einen Einbauabschnitt (251), der auf der Innenseite der Abdeckung (220) fest eingebaut ist, und einen Federabschnitt (252), der an der Außenseite der Schublade (210) anliegt, umfasst.

2. SIM-Karten-Halter mit einer Druckknopfstruktur (200) nach Anspruch 1, wobei die Drehwellenstruktur (230) aufweisend: eine Drehwelle (231), die an der Schublade (210) fest angebracht ist, und einen Drehwellensitz (232), der an der Abdeckung (220) fest angebracht ist, wobei die Drehwelle (231) an dem Drehwellensitz (232) montiert ist.

3. SIM-Karten-Halter mit einer Druckknopfstruktur (200) nach einem der vorhergehenden Ansprüche, wobei die Außenseite der Schublade (210) mit einer ersten Öffnungsnut (211) gebildet ist, wobei der Federabschnitt (252) innerhalb der ersten Öffnungsnut (211) angeordnet ist, und wobei das Ende des Federabschnitts (252) an dem Boden der ersten Öffnungsnut (211) anliegt.

4. SIM-Karten-Halter mit einer Druckknopfstruktur (200) nach einem der vorhergehenden Ansprüche, wobei das Ende des Einbauabschnitts (251) nach innen gebogen ist, um einen Begrenzungshaken (251a) zu bilden, wobei an der Schublade (210) ein Vorsprung (210a) gebildet ist, und wobei der Vorsprung (210a) und der Begrenzungshaken (251a) miteinander verriegelt sind.

5. SIM-Karten-Halter mit einer Druckknopfstruktur (200) nach Anspruch 4, wobei die Innenseite des Vorsprungs (210a) mit einer zweiten Öffnungsnut (212) gebildet ist, und wobei der Begrenzungshaken (251a) innerhalb der zweiten Öffnungsnut (212) angeordnet ist.

6. SIM-Karten-Halter mit einer Druckknopfstruktur (200) nach einem der Ansprüche 4 oder 5, wobei das Ende des Einbauabschnitts (251) eine Führungsnut (251c) durch symmetrische Führungskanten (251b) bildet, und wobei der Vorsprung (210a) innerhalb der Führungsnut (251c) angeordnet ist.

7. Mobiles Endgerät, das einen Körper des mobilen Endgeräts umfasst, wobei innerhalb des Körpers des mobilen Endgeräts ein Knopfschalter vorgesehen ist, wobei der SIM-Karten-Halter eine Schublade (210) und eine Abdeckung (220) umfasst, wobei ein Ende der Abdeckung (220) durch Anordnen einer Drehwellenstruktur (230) mit der Schublade (210) drehbar verbunden ist, wobei das andere Ende der Abdeckung (220) mit einem Druckknopfkontakt (240) versehen ist, und wobei der Knopfschalter mit dem Druckknopfkontakt (240) in Kontaktverbindung steht, und wobei zwischen der Abdeckung (220) und der Schublade (210) ein V-förmiges Federblatt (250) vorgesehen ist, wobei das V-förmige Federblatt (250) einen Einbauabschnitt (251), der auf der Innenseite der Abdeckung (220) fest eingebaut ist, und einen Federabschnitt (252), der an der Außenseite der Schublade (210) anliegt, umfasst.

8. Mobiles Endgerät nach Anspruch 7, wobei die Drehwellenstruktur (230) Folgendes umfasst: eine Drehwelle (231), die an der Schublade (210) fest angebracht ist, und einen Drehwellensitz (232), der an der Abdeckung (220) fest angebracht ist, wobei die Drehwelle (231) an dem Drehwellensitz (232) montiert ist.

9. Mobiles Endgerät nach einem der Ansprüche 7 bis 8, wobei die Außenseite der Schublade (210) mit einer ersten Öffnungsnut (211) gebildet ist, wobei der Federabschnitt (252) innerhalb der ersten Öffnungsnut (211) angeordnet ist, und wobei das Ende des Federabschnitts (252) an dem Boden der ersten Öffnungsnut (211) anliegt.

10. Mobiles Endgerät nach einem der Ansprüche 7 bis 9, wobei das Ende des Einbauabschnitts (251) nach innen gebogen ist, um einen Begrenzungshaken (251a) zu bilden, wobei an der Schublade (210) ein Vorsprung (210a) gebildet ist, und wobei der Vorsprung (210a) und der Begrenzungshaken (251a) miteinander verriegelt sind.

11. Mobiles Endgerät nach Anspruch 10, wobei die Innenseite des Vorsprungs (210a) mit einer zweiten Öffnungsnut (212) gebildet ist, und wobei der Begrenzungshaken (251a) innerhalb der zweiten Öffnungsnut (212) angeordnet ist.

12. Mobiles Endgerät nach einem der Ansprüche 10 oder 11, wobei das Ende des Einbauabschnitts (251) eine Führungsnut (251c) durch symmetrische Führungskanten (251b) bildet, und wobei der Vorsprung (210a) innerhalb der Führungsnut (251c) angeordnet ist.

## Revendications

1. Support de carte SIM ayant une structure de bouton (200), comprenant : un plateau (210) et un cache (220), une extrémité du cache (220) étant connectée en rotation au plateau (210) par l'intermédiaire d'une structure d'arbre de rotation (230), et l'autre extrémité du cache (220) étant munie d'un contact de bouton (240), et une lame-ressort en forme de V (250) étant située entre le cache (220) et le plateau (210), la lame-ressort en forme de V (250) comprenant une partie installation (251) installée fixe sur le côté interne du cache (220) et une partie ressort (252) en butée contre le côté externe du plateau (210).

2. Support de carte SIM ayant une structure de bouton (200) selon la revendication 1, dans lequel la structure d'arbre de rotation (230) comprend : un arbre de rotation (231) monté fixe sur le plateau (210), et un siège d'arbre de rotation (232) monté fixe sur le cache (220), l'arbre de rotation (231) étant assemblé sur le siège d'arbre de rotation (232).

3. Support de carte SIM ayant une structure de bouton (200) selon l'une quelconque des revendications précédentes, dans lequel le côté externe du plateau (210) est formé avec une première rainure d'ouverture (211), la partie ressort (252) étant disposée à l'intérieur de la première rainure d'ouverture (211), et l'extrémité de la partie ressort (252) étant en butée contre le bas de la première rainure d'ouverture (211).

4. Support de carte SIM ayant une structure de bouton (200) selon l'une quelconque des revendications précédentes, dans lequel l'extrémité de la partie installation (251) est pliée vers l'intérieur pour former un crochet de restriction (251a), une protubérance (210a) est formée sur le plateau (210), et la protubérance (210a) et le crochet de restriction (251a) sont verrouillés l'un à l'autre.

5. Support de carte SIM ayant une structure de bouton (200) selon la revendication 4, dans lequel le côté interne de la protubérance (210a) est formé avec une seconde rainure d'ouverture (212), et le crochet de restriction (251a) est disposé dans la seconde rainure d'ouverture (212).

6. Support de carte SIM ayant une structure de bouton (200) selon l'une quelconque des revendications 4 et 5, dans lequel l'extrémité de la partie installation (251) forme une rainure de guidage (251c) à travers des bords de guidage symétriques (251b), et la protubérance (210a) est disposée dans la rainure de guidage (251c).

7. Terminal mobile, comprenant un corps de terminal mobile, un interrupteur-bouton étant situé à l'intérieur du corps de terminal mobile, le support de carte SIM comprenant un plateau (210) et un cache (220), une extrémité du cache (220) étant connectée en rotation au plateau (210) par l'intermédiaire d'une structure d'arbre de rotation (230), l'autre extrémité du cache (220) étant munie d'un contact de bouton (240), et l'interrupteur-bouton étant en connexion par contact avec le contact de bouton (240), et une lame-ressort en forme de V (250) étant située entre le cache (220) et le plateau (210), la lame-ressort en forme de V (250) comprenant une partie installation (251) installée fixe sur le côté interne du cache (220) et une partie ressort (252) en butée contre le côté externe du plateau (210).

8. Terminal mobile selon la revendication 7, dans lequel la structure d'arbre de rotation (230) comprend : un arbre de rotation (231) monté fixe sur le plateau (210), et un siège d'arbre de rotation (232) monté fixe sur le cache (220), l'arbre de rotation (231) étant assemblé sur le siège d'arbre de rotation (232).

9. Terminal mobile selon l'une quelconque des revendications 7 et 8, dans lequel le côté externe du plateau (210) est formé avec une première rainure d'ouverture (211), la partie ressort (252) étant disposée à l'intérieur de la première rainure d'ouverture (211), et l'extrémité de la partie ressort (252) étant en butée contre le bas de la première rainure d'ouverture (211).

10. Terminal mobile selon l'une quelconque des revendications 7 à 9, dans lequel l'extrémité de la partie installation (251) est pliée vers l'intérieur pour former un crochet de restriction (251a), une protubérance (210a) est formée sur le plateau (210), et la protubérance (210a) et le crochet de restriction (251a) sont verrouillés l'un à l'autre.

11. Terminal mobile selon la revendication 10, dans lequel le côté interne de la protubérance (210a) est formé avec une seconde rainure d'ouverture (212), et le crochet de restriction (251a) est disposé dans la seconde rainure d'ouverture (212).

12. Terminal mobile selon l'une quelconque des revendications 10 et 11, dans lequel l'extrémité de la partie installation (251) forme une rainure de guidage (251c) à travers des bords de guidage symétriques (251b), et la protubérance (210a) est disposée dans la rainure de guidage (251c).
